# EUROPÄISCHE PATENTANMELDUNG

(11) **EP 1 304 560 A1**
(43) Veröffentlichungstag der Anmeldung: **23.04.2003**
(21) Anmeldenummer: 02023370.6
(22) Anmeldetag: 18.10.2002
(51) Int. Cl.: G01N 21/59, B29C 65/16, B29C 65/82

(54) **Verfahren zur Qualitätskontrolle von Kunststoffschweissnähten**

(30) Priorität: 22.10.2001 DE 10151345
(71) Anmelder: Laserquipment AG, 91052 Erlangen (DE)
(72) Erfinder: Hierl, Stefan, 92348 Berg (DE); Eitner, Udo, 90607 Rückersdorf (DE); Lenfert, Kai, 91054 Erlangen-Buckenhof (DE); Hofmann Alexander, 91056 Erlangen (DE); Fröhlich, Thomas, 91460 Baudenbach (DE)
(74) Vertreter: Hübner, Gerd, Dipl.-Phys.

(57) **Zusammenfassung**

Ein Verfahren zur Qualitätskontrolle der Schweißnähte von im Überlapp geschweißten Kunststoffbauteilen weißt folgende Merkmale auf:
- Beleuchtung der zu untersuchenden Nahtstelle der Schweißnaht (3) mit einem elektromagnetischen Diagnosestrahl (4, 4'), dessen Wellenlängenspektrum mindestens eine Wellenlänge umfasst, für die das dem Diagnosestrahl (4) zugewandte Bauteil transmassiv ist,
- Detektion der vom Schweißnahtbereich reflektierten Strahlung (R_{SN}) und
- Auswertung der Intensität der reflektierten Strahlung (R_{SN}) für die Qualität des untersuchten Schweißnahtbereichs.

## Beschreibung

Die Erfindung betrifft ein Verfahren zur zerstörungsfreien Prüfung von Kunststoffschweißnähten, die durch Schweißen im Überlappstoß hergestellt wurden. Das Verfahren kann zur Prüfung bereits geschweißter Kunststoffe oder - im Falle des Laserstrahlkunststoffschweißens - in Durchstrahltechnik als prozessbegleitende Qualitätsprüfung eingesetzt werden.

Mediendicht verschweißte Kunststoffgehäuse für elektronische Baugruppen, aber auch für andere Anwendungen gewinnen verstärkt an Bedeutung. Gerade im Bereich Sensorik und Aktorik, in dem elektronische Baugruppen oft bei hohen Temperaturen oder in chemisch aggressiver Umgebung eingesetzt werden, sind besondere Anforderungen an die Dichtheit und Lebensdauer der geschweißten Gehäuse zu stellen. Schweißungen im Überlappstoß bieten dabei folgende Vorteile: Im Hinblick auf etwaige Nacharbeiten von Schweißnähten aus ästhetischen Gründen und vor dem Hintergrund, Schweißnähte mit einem großen tragenden Querschnitt zu erzeugen, bieten im Überlappstoß geschweißte Verbindungen deutliche Vorteile.

Problematisch hierbei ist allerdings die Prüfung der geschweißten Nähte, da diese nicht mehr optisch zugänglich sind und die Qualität der Fügeverbindung bisher nur zerstörend geprüft werden kann. Eine Möglichkeit zur Lösung dieses Problems bei geschlossenen Gehäusen ist die Dichtheit der Schweißnaht zu prüfen und nur eine gewisse Leckrate zuzulassen. Um eine Druckerhöhung innerhalb des Gehäuses zu realisieren, ist allerdings eine Öffnung nach außen notwendig, die wiederum einer Dichtheitsforderung entgegenspricht und somit nachträglich noch abgedichtet werden muss.

Das Prinzip des Kunststoffschweißens basiert auf dem Aufschmelzen der Fügeflächen durch Wärmezufuhr und dem gleichzeitigen oder anschließenden Fügen und Fixieren unter Druck. Das Fließen der Schmelze wird als Schlüssel des Prozesses angesehen, ist für die entstehende Schweißnahtstruktur verantwortlich und damit Spiegel des Prozesses.

Die verschiedenen Technologien können nach ihrem physikalischen Prinzip der Wärmeeinbringung unterschieden werden. Während man sich bei der handwerklichen Fertigung überwiegend die Wärmeleitung und Konvektion zunutze macht, werden beim industriellen Schweißen von Serienteilen hauptsächlich die äußere und innere Reibung und in Ausnahmefällen die Strahlung verwendet. Eine weitere Variante des Kunststoffschweißens ist das Extrusionsschweißen, bei dem neben der direkten Erwärmung der Fügeflächen zusätzlich durch einen schmelzeflüssigen Zusatzwerkstoff eine Wärmezuführ an die Fügestelle erfolgt. Zur Erzeugung von Schweißverbindungen im Überlappstoß werden das Vibrationsschweißen und das Schweißen der Fügepartner durch elektromagnetische Strahlung eingesetzt.

Eine Strahlungserwärmung wird in der Kunststoffverarbeitung hauptsächlich für Umform- oder Trocknungsprozesse eingesetzt und kommt beim Kunststoffschweißen bisher vergleichsweise wenig zum Einsatz. Es gibt Infrarotrohrschweißmaschinen für spezielle Werkstoffgruppen, welche als Reinraumrohrsysteme aus dem Werkstoff PVDF hergestellt werden. In Einzelfällen wird in der Großserie nach dem sog. Hochtemperaturheizelementschweißen ohne Kontakterwärmung mit Strahlungserwärmung geschweißt. Nicht zuletzt wegen der Verfügbarkeit von robusten, lebensdauerbeständigen Strahlersystemen haben diese Anwendungen aber nach wie vor ausgesprochenen Nischencharakter. Die verfahrenstechnischen Vorteile der Strahlungserwärmung liegen in der "inneren" berührungslosen Erwärmung der Fügeteile ohne die Bauteile einer mechanischen Beanspruchung auszusetzen.

Das Schweißen von Kunststoffen mit Laserstrahlung stellt einen Spezialfall der Verfahren mit Strahlungserwärmung dar. Im Gegensatz zu breitbandigen Strahlern emittieren Laser nur Strahlung einer Wellenlänge. Die besonderen Eigenschaften der Laserstrahlung bieten einige signifikante Vorteile gegenüber anderen Strahlungsquellen. Zum einen kann die Laserstrahlung sehr fein fokussiert werden, wodurch sehr schmale Schweißnähte erzielt werden können. Zum anderen können, wie im folgenden beschrieben, durch die Wahl der Laser-Wellenlänge bestimmte Absorptionseigenschaften des Kunststoffs ausgenutzt werden. Aufgrund der Transparenz der meisten Thermoplaste für die Wellenlängen des Nd:YAG- (1064 nm) und des Diodenlasers (780 nm - 960 nm) können Kunststoffe auch im Durchstrahl-Schweißverfahren gefügt werden, insbesondere wie dies in den Fachaufsätzen von Hänsch D, Ebert, T.: "Kunststoffschweißen - Entscheidend sind die Nähte." in LASER-PRAXIS / Juni 1999, Seite 16 ff. beschreiben ist. Insbesondere seit der Entwicklung von Hochleistungsdiodenlasern findet das Laserstrahl-Kunststoffschweißen eine immer breitere Anwendung in der Industrie. Beim Durchstrahlschweißen werden zwei Kunststoffe mit unterschiedlichen Absorptionseigenschaften, welche durch unterschiedliche Füllstoffe oder Füllstoffkonzentrationen eingestellt werden, im Überlapp verschweißt. Die zu fügenden Kunststoffteile liegen übereinander und die Laserstrahlung wird durch den für die Laserwellenlänge transparenten Kunststoff hindurch auf das absorbierende Unterteil fokussiert. Der absorbierende Kunststoff schmilzt oberflächlich auf und über Wärmeleitung und -strahlung wird auch der transmissive Kunststoff aufgeschmolzen, sodass es zu einem Verschweißen der Fügepartner kommt. Durch eine Relativbewegung des Laserstrahls zum Werkstück entsteht die Schweißnaht. Hierbei wird nur ein geringes Schmelzevolumen bei einem hohen Verbindungsquerschnitt erzeugt, wobei Schmelzeaustrieb weitgehend verhindert werden kann. Einschlägiger Stand der Technik ist hier der Fachaufsatz von Potente, H.; Pecha, E.; Korte, J.; "Entwicklungstendenzen beim Laserschweißen von Kunststoffen" in Plastverarbeiter 46. Jahrgang Nr. 10, 1995, Seite 58-64.

Probleme beim Schweißen von Kunststoffen mittels Laserstrahlung treten dann auf, wenn ein Spalt zwischen den Fügepartnern vorliegt. Die Notwendigkeit eines Nullspaltes beim Spannen der Werkstücke ist somit von entscheidender Bedeutung für den sicheren Schweißprozess und für das Erzeugen einer durchgehenden, geschlossenen und mediendichten Naht. Dies gilt sowohl für das Vibrationsschweißen, da beim Vorhandensein eines Spaltes keine Erwärmung durch Reibung an dieser Stelle erfolgen kann, als auch für das Schweißen durch Strahlungserwärmung, wie beim Laserstrahlschweißen, wenn das Schmelzevolumen nicht ausreicht den Spalt zu überbrücken.

Ausgehend von den beschriebenen Kunststoffschweißverfahren liegt der Erfindung die Aufgabe zu Grunde, eine zuverlässige Qualitätskontrollverfahren zur Verfügung zu stellen, mit dem insbesondere das Vorhandensein eines Spaltes entlang der Schweißnaht zerstörungsfrei zu detektieren ist.

Diese Aufgabe wird durch die im Patentanspruch 1 angegebenen, kennzeichnenden Verfahrenmerkmalen wie folgt gelöst:
- Beleuchtung der zu untersuchenden Nahtstelle der Schweißnaht mit einem elektromagnetischen Diagnosestrahl, dessen Wellenlängenspektrum mindestens eine Wellenlänge umfasst, für die das dem Diagnosestrahl zugewandte Bauteil transmassiv ist.
- Detektion der vom Schweißnahtbereich reflektierten Strahlung, und
- Auswertung der Intensität der reflektierten Strahlung als Kriterium für die Qualität des untersuchten Schweißnahtbereiches.

Die Erfindung lehnt sich also an das Laser-Durchstrahlschweißen von Kunststoffen an, die in einem Teilbereich des Wellenlängenspektrums elektromagnetischer Strahlung, meist im nahen Infrarotbereich, transmissiv sind. Die Schweißkontur wird hierbei mit einer Wellenlänge bestrahlt, für die der Kunststoff eine ausreichende Transmission aufweist. Ein Teil der Strahlung wird bereits an der Oberfläche des Kunststoffes reflektiert. Ein weiterer Teil wird durch das Kunststoffoberteil bis zur Fügestelle transmittiert. Dort findet wiederum Reflexion der elektromagnetischen Strahlung statt, die, je nachdem, ob und welcher Qualität eine stoffschlüssige Verbindung zwischen den beiden Kunststoffteilen vorliegt, an dieser Stelle unterschiedlich hoch ist. Im allgemeinen wird bei der Existenz eines Spaltes mehr Licht reflektiert und man kann durch Detektion der Gesamtreflexion eine Aussage über das Vorhandensein eines Spaltes treffen. Der Transmissionsgrad des Kunststoffoberteils ist entscheidend für die Einsetzbarkeit der Reflexionsdiagnostik. Füllstoffe, wie Glaskugeln oder eine Glasfaserverstärkung, die Streuzentren für das transmittierte Licht bilden, wirken sich hierbei negativ auf das Auflösungsvermögen der Spaltdiagnostik aus. Es ist aber dennoch möglich, die Reflexionsdiagnostik auch an gefüllten oder leicht absorbierenden Kunststoffen einzusetzen, sofern die reflektierte Strahlung mit genügend hoher Auflösung detektiert werden kann. Durch Dickenunterschiede oder durch optische Inhomogenitäten innerhalb des Kunststoffes kann es auch entlang der Schweißkontur zu Unterschieden in der Reflexion kommen. Beim Prüfen einer Schweißnaht kann in einem solchen Fall die gemessene Reflexion in Relation zur Reflexion einer Gutschweißung oder zur Reflexion an einem unverschweißten Kunststoffoberteils an der selben Stelle gesetzt werden.

Als Alternative zu einer nachgeschalteten Prüfung der Schweißnaht ist die prozessbegleitende Reflexionsdiagnostik beim Laserstrahlkunststoffschweißen zu sehen. Beim Laserstrahlkunststoffschweißen in Durchstrahltechnik wird ohnehin mit Licht einer Wellenlänge geschweißt, für die der obere Fügepartner transparent ist. Der Laserstrahl kann damit direkt als Diagnosestrahl zur Reflexionsdiagnostik herangezogen werden, wobei das erfindungsgemäße Prüfverfahren sowohl für das Konturschweißen als auch das Quasi-Simultanschweißen geeignet ist.

Zur Detektion der reflektierten Strahlung können ortsauflösende Detektoren wie Zeilen- oder CCD-Kameras verwendet werden, die bei der Detektion der reflektierten Strahlung neben der Erkennung von Spalten eine zusätzliche Information über die Schweißnahtbreite erlauben. Ein Alternative hierzu sind nicht ortsauflösende, photoempfindliche Detektoren, die im Wellenlängenbereich der eingesetzten Diagnostikwellenlänge empfindlich sind. Dabei können einzelne Photodetektoren wie beispielsweise Si-Photozellen verwendet werden, die entweder direkt im Strahlengang positioniert sind, oder das zu detektierende Licht wird über eine Glasfaseroptik aus dem Strahlengang zum Photodetektor geleitet, wodurch sich Störungen für die Verstärkerschaltungen leichter eliminieren lassen. Hierbei können einzelne oder Gruppen von Lichtleitern verwendet werden. Bei letzteren liegen die optischen Achsen der Faserenden so, dass sie auf die Schweißzone gerichtet sind. Die entgegengesetzten Faserenden können dann zu einem Bündel zusammengefasst und durch eine geeignete Abbildungsoptik auf eines oder mehrere Strahlungsdetektionselemente abgebildet werden. Die Signalerfassung kann dabei ortsaufgelöst - d. h., dass bestimmten Fasern bestimmte Detektoren definiert zugeordnet sind - oder nicht ortsaufgelöst erfolgen. In letzterem Falle wird die aus dem Bündel austretende Strahlung auf einen oder mehrere Detektoren lageunspezifiziert gerichtet.

Neben der beispielsweise in einer Steuereinheit zentralen Anordnung eines oder mehrerer Photodetektoren können diese gemäß einer bevorzugten Ausführungsform des erfindungsgemäßen Verfahrens auch um den Laserkopf im Bereich des Strahlaustritts positioniert werden. Dies ist als dezentrale Anordnung zu verstehen.

Weitere Merkmale, Einzelheiten und Vorteile der Erfindung sind der nachfolgenden Beschreibung entnehmbar, in der das Grundprinzip des erfindungsgemäßen Verfahrens und Ausführungsbeispiele für die Verfahrensdurchführung anhand der beigefügten Zeichnungen näher erläutert werden. Es zeigen:
- Fig. 1 und 2: schematische Längsschnitte durch zwei Fügepartner mit dazwischen liegender Schweißnaht, sowie
- Fig. 3 bis 7: schematische Ansichten von Reflektionsdiagnostik-Vorrichtungen in unterschiedlichen Ausführungsformen.

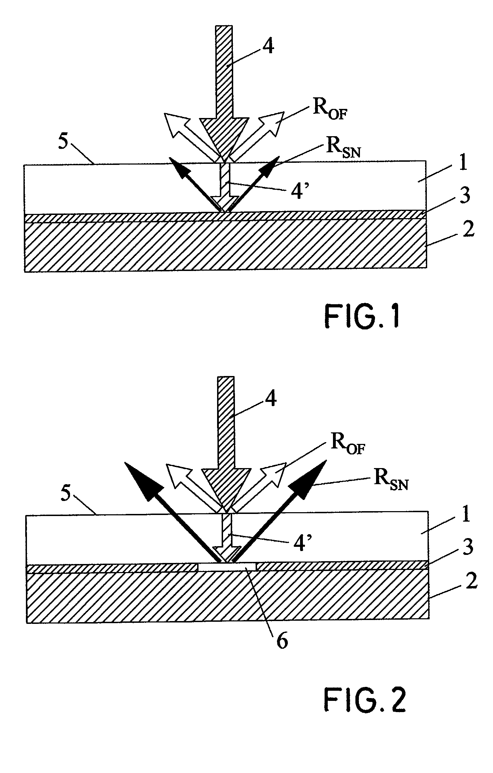

Anhand an Fig. 1 und 2 ist das dem erfindungsgemäßen Reflektionsdiagnostikverfahren zugrunde liegende Prinzip zu erläutern. So werden zwei Fügepartner, nämlich ein oberes, transparentes Kunststoffteil 1 und ein unteres, für Laserstrahlung absorbierendes Kunststoffteil 2 durch von oben eingestrahltes Laserlicht unter Bildung der Schweißnaht 3 miteinander stoffschlüssig verbunden.

Zur zerstörungsfreien Überprüfung der Qualität der Schweißnaht 3, also insbesondere deren Gleichmäßigkeit und Durchgängigkeit, wird von oben auf die Schweißnaht 3 mit einem Diagnosestrahl 4 beleuchtet. Ein bestimmter Anteil der eingestrahlten Intensität wird - Reflektionsstrahlung R_{OF}- an der Oberfläche 5 des oberen Kunststoffteils 1 reflektiert. Der durch das obere Kunststoffteil durchlaufende Anteil 4' des Diagnosestrahls wird teilweise vom unterem Kunststoffteil absorbiert, zum Teil - Reflektionsstrahlung R_{SN}- aber auch an der Schweißnaht 3 reflektiert. Die Intensität der reflektierten Strahlung R_{SN} ist in der Regel um so größer, je mehr Grenzfläche zwischen Bereichen unterschiedlicher optischer Dichte vorhanden ist. Dies bedeutet, dass insbesondere an einem Spalt 6 in der Schweißnaht 3 eine in ihrer Intensität signifikant höhere Reflektionsstrahlung R_{SN} auftritt, wie dies in Fig. 2 bildlich dargestellt ist.

Basierend auf diesen Prinzip kann durch Abfahren der Schweißnaht 3 mit einem Diagnosestrahl 4, die Detektion der vom Schweißnahtbereich reflektierten Strahlung R_{SN} und die Auswertung deren Intensität die Schweißnaht 3 in Ihrer Qualität diagnostiziert werden.

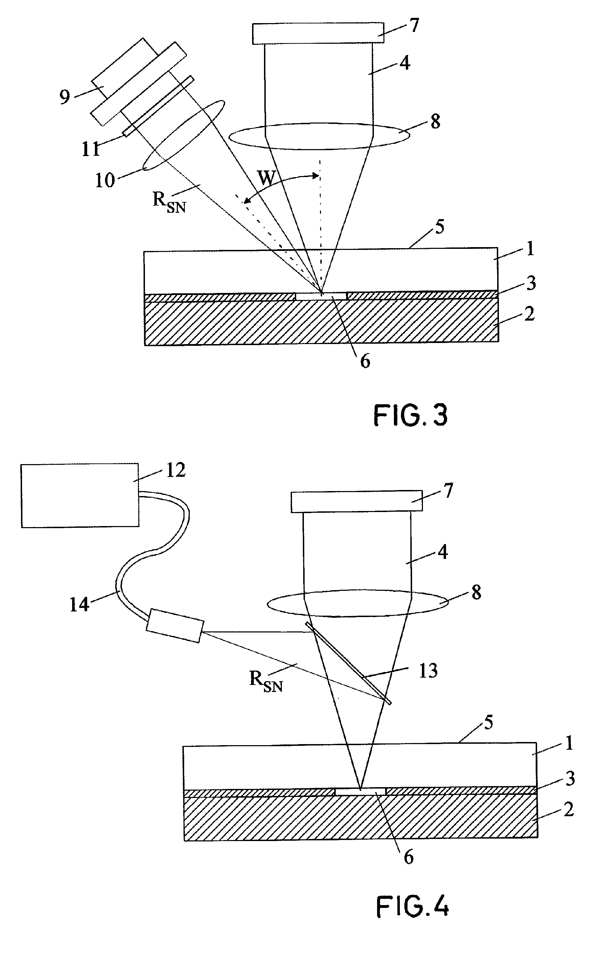

Zur Durchführung dieses Qualitätskontrollverfahrens kann die in Fig. 3 dargestellte Diagnosevorrichtung eingesetzt werden. Diese umfasst eine Laserstrahlquelle 7, die den Diagnosestrahl 4 emittiert. Durch eine Fokussieroptik 8 wird der Diagnosestrahl 4 auf die Ebene der Schweißnaht 3 scharf abgebildet. In einem Winkel W seitlich von der Einfallsebene des Diagnosestrahls 4 ist nun eine CCD-Kamera 9 so angeordnet, dass ihre Aufnahmeachse den Auftreffpunkt des Diagnosestrahls 4 im Schweißnahtbereich 3 erfasst. Der CCD-Kamera sind dabei eine Abbildungsoptik 10 und eine Filtereinheit 11 vorgeschaltet. Letztere eliminiert störende Strahlung und lässt lediglich Licht der Wellenlänge des Diagnosestrahls 4 passieren.

Zur Kontrolle der gesamten Schweißnaht 3 wird der Diagnosestrahl 4 mit Hilfe seiner Fokussieroptik 8 und der Diagnoseeinheit mit CCD-Kamera 9, Abbildungsoptik 10 und Filtereinheit 11 entlang der Schweißnaht 3 verschoben.

Bei der in Fig. 3 dargestellten Off-axis-Anordnung der Diagnoseeinheit würde die Erfassung der von der Schweißnaht 3 reflektierten Strahlung R_{SN} bei einer Bewegung des Diagnosestrahls 4 nach rechts bezogen auf Fig. 3 stechend, bei einer Bewegung nach links schleppend erfolgen.

Bei den in Fig. 4 gezeigten Ausführungsform einer Diagnosevorrichtung zur Durchführung des erfindungsgemäßen Verfahrens wird die im Beleuchtungsstrahlungsgang des Diagnosestrahls 4 zurückgeworfene Reflektionsstrahlung R_{SN} mit Hilfe eines nach der Fokussieroptik 8 in diesem Strahlengang positionierten halbdurchlässigen Spiegels 13 ausgeblendet und in eine entsprechende, schematisch angedeutete Glasfaser 14 eingestrahlt. Letztere führt die Reflektionsstrahlung R_{SN} zu einem Photodetektor 12, mit dessen Hilfe wiederum die Intensität der Reflektionsstrahlung R_{SN} gemessen werden kann.

Durch die beschriebene Verwendung von glasfasergekoppelten Detektoren werden zum einen Störungen bei der elektronischen Verstärkung der Signale verhindert, da die Signalverstärker an einem bezüglich EMV geschützten Ort platziert werden können. Zum anderen kann bei dieser Ankopplung der Detektoreinheit auf eine Abbildungsoptik verzichtet werden, da durch die Numerische Apertur der Glasfaser 14 der Raumwinkelbereich, innerhalb dessen die reflektierte Strahlung R_{SN} gemessen wird, begrenzt ist.

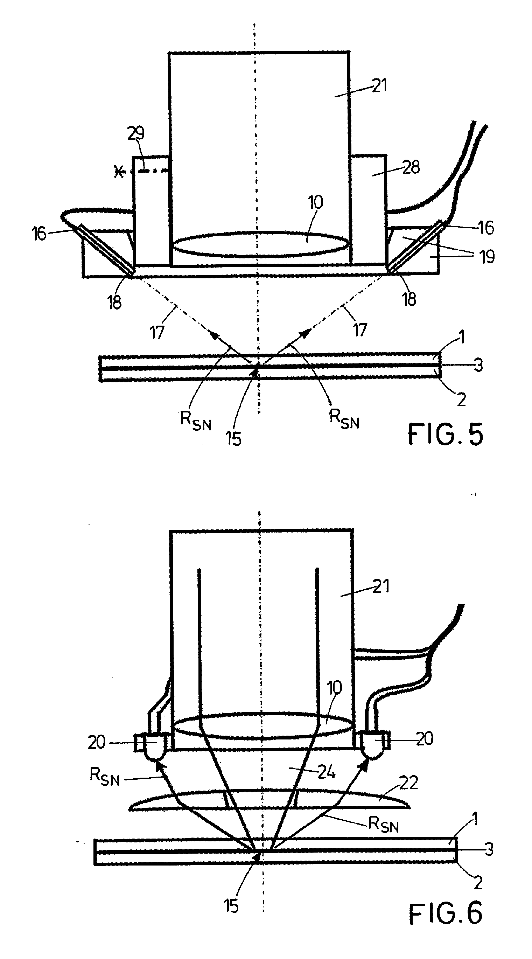

Bei dem in Fig. 5 gezeigten Ausführungsbeispiel wird die Schweißzone 15 mit einer Glasfaseroptik "beobachtet," die aus einer Vielzahl von Faser-Lichtleitern besteht. Die optischen Achsen 17 deren Faserenden 18 sind dabei auf die Schweißzone 15 gerichtet. Die Zahl der Faser-Lichtleitern 16 kann stark variieren, ausgehend von zwei Lichtleitern 16, wie sie in Fig. 5 gezeigt sind, können über beispielsweise vier, jeweils 90° versetzt um den Laser 17 herum angeordnete Leiter bis zu einem ganzen Ringfaserbündel eingesetzt werden, wie es beispielsweise zur Objektbeleuchtung in der Mikroskopie verwendet wird. Damit kann die von der Schweißzone 15 reflektierte Strahlung R_{SN} in allen Raumwinkeln photosensitiv gemessen werden.

Werden die nicht gezeigten, mit der Sensorik gekoppelten Faserenden der Lichtleiter 16 gebündelt einem Photodetektor zugeführt, so wird die Reflektionsstrahlung R_{SN} nicht-ortsaufgelöst, d. h. nicht für den jeweiligen Raumwinkel spezifisch detektiert. Bei einer Einzelerfassung der Signale aus den einzelnen Lichtleitern 16 durch entsprechend getrennte Photodetektoren kann demgegenüber eine ortsaufgelöste Erfassung stattfinden.

Zur Halterung sind die Faser-Lichtleiter 16 in einem üblichen Konusring 19 eingespannt, der über einen Adapterring 28 am Laserkopf 21 befestigt ist. Der Adapterring 28 ist mittels einer strichpunktiert angedeuteten Klemmschraube 29 fixiert..

Bei der in Fig. 6 gezeigten Ausführungsform wird das erfindungsgemäße Verfahren durch direkt "vor Ort" befindliche Photodetektoren 20 realisiert, die um den Laserkopf 21 der Diagnose- bzw. Schweißeinrichtung gruppiert sind. Die Reflektionsstrahlung R_{SN}, die von der Schweißzone 15 ausgeht, wird dabei über eine Ringlinse 22 in einen entsprechenden Raumwinkel auf die Photodetektoren 20 projeziert, sodass diese ortsaufgelöst die Reflektionsstrahlung R_{SN} erfassen. Durch die zentrale Öffnung 23 der Ringlinse 22 tritt dabei ungestört der Laserstrahl 4 hindurch.

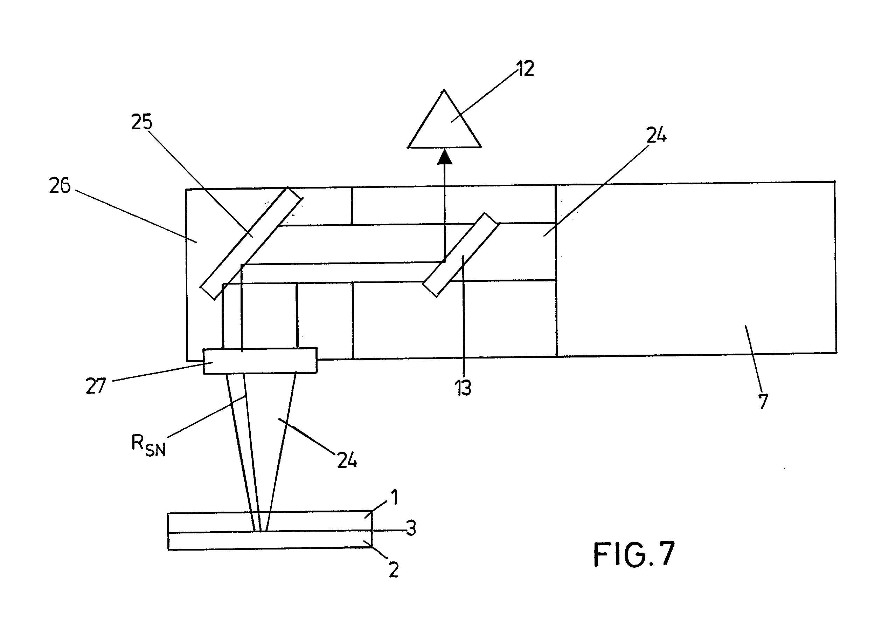

Die Fig. 7 schließlich zeigt schematisch eine Laserschweißeinrichtung für das Quasi-Simultanschweißen, bei der der von der Laserstrahlquelle 7 ausgesendete Laserstrahl 24 über einen Scannerspiegel 25 im Scannerkopf 26 und ein sogenanntes F-Theta-Objektiv auf die zu verschweißenden Kunststoffteile 1, 2 gerichtet wird. Durch den Scannerspiegel 25 und das F-Theta-Objektiv 27 wird der Laserstrahl 24 schnell über die Schweißkontur geführt, sodass die beiden Fügepartner entlang der gesamten Schweißkontur allmählich bis zum Erreichen der Verschweißungstemperatur erhitzt werden. Dadurch findet der Verschweißvorgang quasi-simultan gleichzeitig entlang der gesamten Schweißkontur statt.

Die dabei reflektierte Strahlung R_{SN} wird über das F-Theta-Objektiv 27 und den Scannerspiegel 25 zu einen im Laserstrahl 24 positionierten Strahlteiler in Form eines halbdurchlässigen Spiegels 13 zurückprojeziert, der die Reflektionsstrahlung R_{SN} zu einem Photodetektor 12 zur Intensitätserfassung aus dem Laserstrahl 24 ausblendet. Auf diese Weise kann das erfindungsgemäße Diagnoseverfahren auch beim quasi-simultanen Schweißen eingesetzt werden, wobei der Diagnosestrahl wiederum durch den eigentlichen Schweißstrahl repräsentiert ist.

## Patentansprüche

1. Verfahren zur Qualitätskontrolle der Schweißnähte von im Überlapp geschweißten Kunststoffbauteilen mit folgenden **kennzeichnenden** Merkmalen:
- Beleuchtung der zu untersuchenden Nahtstelle der Schweißnaht (3) mit einem elektromagnetischen Diagnosestrahl (4, 4'), dessen Wellenlängenspektrum mindestens eine Wellenlänge umfasst, für die das dem Diagnosestrahl (4) zugewandte Bauteil (1) transmissiv ist,
- Detektion der vom Schweißnahtbereich reflektierten Strahlung (R_{SN}), und
- Auswertung der Intensität der reflektierten Strahlung (R_{SN}) als Kriterium für die Qualität des untersuchten Schweißnahtbereiches.

2. Verfahren nach Anspruch 1, **dadurch gekennzeichnet, dass** Beleuchtung der Schweißnaht (3), Detektion der reflektierten Strahlung (R_{SN}) und Auswertung deren Intensität kontinuierlich während des Abfahrens einer Schweißnaht (3) mit dem Diagnosestrahl (4, 4') erfolgen.

3. Verfahren nach Anspruch 1 oder 2, **dadurch gekennzeichnet, dass** für die Beleuchtung der Schweißnaht (3) ein Laserstrahl (4, 4') eingesetzt wird, wobei die reflektierte Strahlung (R_{SN}) on-axis über einen Strahlteiler (13) aus dem Laserstrahl (4, 4') ausgekoppelt oder off-axis aus einem Raumwinkel (W) durch Detektoren (9, 12) erfasst wird.

4. Verfahren nach einem der vorgenannten Ansprüche, **dadurch gekennzeichnet, dass** für die Detektion der reflektierten Strahlung (R_{SN}) ortsauflösende Detektoren, insbesondere Zeilen- oder CCD-Kameras (9) eingesetzt werden.

5. Verfahren nach einem der Ansprüche 1 bis 4, **dadurch gekennzeichnet, dass** die reflektierte Strahlung (R_{SN}) über eine Glasfaseroptik (14) off-axis aufgenommen und mindestens einem Photodetektor (12) zugeführt wird.

6. Verfahren nach Anspruch 5, **dadurch gekennzeichnet, dass** mehrere Lichtleiter (16) aus verschiedenen Raumwinkeln die reflektierte Strahlung (R_{SN}) erfassen.

7. Verfahren nach Anspruch 6, **dadurch gekennzeichnet, dass** zur ortsaufgelösten Erfassung der reflektierten Strahlung (R_{SN}) die Lichtleiter (16) mit verschiedenen Photodetektoren gekoppelt werden.

8. Verfahren nach Anspruch 6, **dadurch gekennzeichnet, dass** zur nichtortsaufgelösten Erfassung der reflektierten Strahlung (R_{SN}) die Lichtleiter (16) zu einem Bündel zusammengefasst und mit einem Photodetektor gekoppelt werden.

9. Verfahren nach einem der vorgenannten Ansprüche, **dadurch gekennzeichnet, dass** die reflektierte Strahlung (R_{SN}) durch eine Filtereinheit (11) auf den Detektor (12) gerichtet wird.

10. Verfahren nach Anspruch 1 oder 2, **dadurch gekennzeichnet, dass** die reflektierte Strahlung (R_{SN}) über eine den Diagnosestrahl (4) umgebende Ringlinse (22) direkt auf mehrere um den Laserkopf (21) gruppierte Photodetektoren (20) projeziert wird.

11. Verfahren nach einem der vorgenannten Ansprüche, **dadurch gekennzeichnet, dass** die Intensität der reflektierten Strahlung (R_{SN}) in Relation zur Reflexionsintensität einer Gutschweißung oder eines unverschweißten Kunststoffoberteils ausgewertet wird.
